(19) Europäisches Patentamt
European Patent Office
Office européen des brevets

(11) EP 3 929 421 A1

(12) EUROPÄISCHE PATENTANMELDUNG

(43) Veröffentlichungstag:
29.12.2021  Patentblatt 2021/52

(51) Int Cl.:
F02D 41/14 (2006.01)  G06N 3/08 (2006.01)

(21) Anmeldenummer: 21180842.3

(22) Anmeldetag: 22.06.2021

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME
Benannte Validierungsstaaten:
KH MA MD TN

(30) Priorität: 23.06.2020  DE 102020116488

(71) Anmelder: IAV GmbH
Ingenieurgesellschaft Auto und Verkehr
10587 Berlin (DE)

(72) Erfinder:
• Dr. Schmidt, Dennis
  38442 Wolfsburg (DE)
• Dr. Reinhardt, Rocco
  38524 Sassenburg (DE)
• Dr. Kruschel, Christian
  38106 Braunschweig (DE)
• Dr. Binnewies, Tomas
  29336 Nienhagen (DE)

(74) Vertreter: Fukala, Georg
IAV GmbH
Ingenieurgesellschaft Auto und Verkehr
Entwicklungszentrum Chemnitz/Stollberg
Auer Straße 54
09366 Stollberg (DE)

(54) **VERFAHREN ZUM BETREIBEN EINER BRENNKRAFTMASCHINE, STEUERGERÄT UND BRENNKRAFTMASCHINE**

(57)  Verfahren zum Betreiben einer Brennkraftmaschine (1) mit einer Lambdaregelung, unter Anwendung eines neuronalen Netzes (NN), wobei das neuronale Netz eingerichtet ist, um eine in der Zukunft liegende Regelabweichung (ê) der Regelgröße des Lambda-Istwertes ($\lambda_{ist}$) vorherzusagen und in der Art in eine bestehende Lambdaregelung einzubringen, dass zukünftige Regelabweichungen (e) des Lambda-Istwertes ($\lambda_{ist}$) kompensiert werden. Das Verfahren umfasst weiterhin die automatisierte Auswahl (FSS) von Störgrößen ($d_S$), die als Eingangsgrößen ($x_n$) des neuronalen Netzes (NN) dienen, das Optimieren des neuronalen Netzes (NN) mittels verstärktem Lernen (RL) sowie die Bewertung des trainierten Netzes mittels Berechnung der Sauerstoffbefüllung eines Abgaskatalysators, vor dem Betreiben der Brennkraftmaschine (1).

Figur 5

**Beschreibung**

**Technisches Gebiet**

Die vorliegende Erfindung betrifft ein Verfahren zum Betreiben einer Brennkraftmaschine, insbesondere ein Verfahren zur Regelung eines Luft-Kraftstoff-Verhältnisses, unter Anwendung eines neuronalen Netzes (NN), ein Steuergerät zum Betreiben einer Brennkraftmaschine, unter Anwendung des erfindungsgemäßen Verfahrens sowie eine Brennkraftmaschine, auf der das erfindungsgemäße Verfahren ausgeführt werden kann.

**Stand der Technik**

Bei Brennkraftmaschinen, in denen eine Regelung des Luft-Kraftstoff-Verhältnisses, oder mit anderen Worten eine Lambdaregelung, angewendet wird, erfolgt die Berechnung eines Kraftstoffeinspritzmengen-Sollwertes im Wesentlichen unter Berücksichtigung einer prädizierten Luftfüllung und eines betriebspunktabhängigen Lambda-Sollwertes. Hierbei soll der Kraftstoffeinspritzmengen-Sollwert einen bestimmten Wert annehmen, um ein gewünschtes Lambda stromaufwärts eines Abgaskatalysators einer Abgasabführleitung zu erhalten. Dieser gewünschte Lambda-Sollwert entspricht üblicherweise dem stöchiometrischen Verhältnis von 1, um eine optimale Konvertierung von Abgasemissionen im Abgaskatalysator zu erhalten. Hierfür wird eine kennfeldbasierte Basiskraftstoffeinspritzmenge in einer betriebspunktabhängigen Vorsteuerung berechnet. Diese kann weiterhin über diverse Korrekturfaktoren verändert werden, welche nicht erfassbare Störungen sowie Modell- und Prozessunsicherheiten berücksichtigen, die zu einer Differenz zwischen dem Lambda-Sollwert und einem gemessenen Lambda-Istwert führen. Der Lambda-Istwert wird üblicherweise über einen stromabwärts des Abgaskatalysators angeordneten Sauerstoffsensor ermittelt. Allein wegen der zeitlichen Verzögerung der Strömung des Abgases durch die Abgasabführleitung und den Abgaskatalysator entsteht aufgrund der Gasdynamik eine Differenz zwischen dem Soll- und dem Istwert von Lambda, oder mit anderen Worten eine Regelabweichung. Um diese Differenz zu neutralisieren, werden Regler eingesetzt, welche die Kraftstoffeinspritzmenge nach solcherart verändern, um die Regelabweichung zu minimieren.

Im Stand der Technik haben sich hierbei Regelsysteme etabliert, welche PID-Regler verwenden und durch Anwendung von variablen Streckenzeitkonstanten und unter Berücksichtigung von Totzeiten insbesondere den Einfluss der Gasdynamik minimieren sollen.

In DE 10 2015 210 381 A1 wird ein Verfahren zum Betreiben einer Brennkraftmaschine mit einer Lambdaregelung offenbart, wobei eine Lambdaregelabweichung auf einem Lambda-Istwert und einem generierten Lambda-Sollwert berechnet wird. Die Generierung des Lambda-Sollwertes umfasst eine Anpassung an die laufzeitbehaftete und verzögerte Erfassung des Lambda-Istwertes. Die nach solcherart berechnete Lambdaregelabweichung wird einer Regeleinheit zugeführt, welche einen PID-Regler umfasst und eine Reglerkraftstoffmenge ausgibt. Eine kennfeldbasierte, aus einer Vorsteuerung berechnete, Basiskraftstoffmenge wird um die Reglerkraftstoffmenge sowie um eine konventionelle adaptive Kraftstoffmenge korrigiert. Zusätzlich wird eine gemessene Luftmassenabweichung aus dem Saugrohr der Brennkraftmaschine in eine Störungskraftstoffmenge umgerechnet und korrigiert ebenfalls die Basiskraftstoffmenge. Auf diese Art und Weise soll den Einflüssen der Streckentotzeit und einer sprunghaften Dynamik von konventionellen Lambdaregelungen entgegengewirkt werden.

Konventionelle Lambdaregelsysteme unterliegen jedoch funktionsbedingt dem Nachteil, dass sie erst auf eine Regelabweichung reagieren können, wenn diese entstanden sind, wobei zwangsweise eine verzögerte Anpassung des Kraftstoffeinspritzmengen-Sollwertes entsteht. Hierbei kann es zu verstärkten Oszillationen in der Lambdaregelung und somit zu Gasausflügen kommen. Um die Reaktionszeiten von Lambdaregelsystemen dahingehend zu minimieren, finden alternativ zu PID-Reglern auch NN Anwendung.

In JP3144264B2 ist ein Lambdaregelsystem offenbart, wobei ein NN dazu verwendet wird, um einen Kraftstoffeinspritzmengenkorrekturfaktor zu berechnen, welcher einer Eingangsgröße einer Einspritzmengenkorrektur ist und hierbei auf eine kennfeldbasierte Basiseinspritzmenge sowie weitere konventionelle Einspritzmengenkorrekturfaktoren addiert wird. Das NN ergänzt somit eine konventionelle Lambdaregelung und berechnet einen geschätzten Lambda-Istwert in Echtzeit. Die Eingangsgrößen für das NN sind mittels Sensoren gemessene physikalische Kenngrößen von Brennkraftmaschinen, umfassend die Motordrehzahl, den Ansaugluftdruck, die Drosselklappenstellung, die Kühlmitteltemperatur, die Ansauglufttemperatur, den Lambda-Istwert, sowie berechnete Kenngrößen, umfassend die AGR-Rate und die Solleinspritzmenge.

In EP 1 854 984 A1 ist ein Verfahren zur Steuerung des Lambda-Verhältnisses einer Brennkraftmaschine offenbart, wobei die konventionelle Lambdaregelung durch ein NN ersetzt ist, welches den geschätzten Lambda-Istwert in Echtzeit und synchron zur Kurbelwellendrehzahl der Brennkraftmaschine berechnet. Das NN verarbeitet hierzu die aktuellen Werte physikalischer Kenngrößen der Brennkraftmaschine als Eingangsgrößen, umfassend die aktuelle Kraftstoffeinspritzmenge, die Kraftstoffeinspritzdauer, die Motordrehzahl, die Kühlwassertemperatur, den Saugrohrluftdruck sowie eine auf Grundlage des gemessenen Zylinderinnendrucks berechnete Streckentotzeit. Die Ausgangsgröße ist hierbei der berechnete Lambda-Istwert, welcher zusätzlich einer Driftkompensation unterzogen wird, welche die Alterung der Brennkraftmaschine und deren Sensoren und Komponenten berücksichtigen soll. Der korrigierte berechnete Lambda-Istwert ist weiterhin Eingangsgröße der Kraftstoffeinspritzmengenberechnung, in welche auch der gemessene Lambda-Istwert eingeht. Das Verfahren kann parallel zur einer konventionellen Feedback-Control bzgl. der Lambdaregelung angewendet werden und soll die Zeitverzögerung von dieser eliminieren, sowie besonders in einem Betriebszustand der Brennkraftmaschine, in dem ein Sensor zum Erfassen des Lambda-Istwertes außer Betrieb ist, die Abgasemissionen erheblich reduzieren.

Trotz Minimierung der Reaktionszeit durch die Anwendung von NN reagieren konventionelle Lambdaregelsysteme lediglich auf eine entstandene Abweichung und unterliegen somit weiterhin den Zeitverzögerungen durch Streckentotzeiten. Weiterhin bestehen die Eingangsgrößen für die Berechnung von Korrekturfaktoren in konventionellen Lambdaregelsystemen lediglich im Wesentlichen aus den grundlegenden betriebszustands- und verbrennungsbeschreibenden physikalischen Kenngrößen von Brennkraftmaschinen, wie der Last und Drehzahl, der Kraftstoffeinspritzmenge und dem Einspritzzeitpunkt, der Temperatur und Masse der zur Verfügung stehenden Luftmenge und ggf. weiteren bekannten Kenngrößen.

## Aufgabe der Erfindung

Der vorliegenden Erfindung liegt die Aufgabe zugrunde, ein Verfahren zum Betreiben einer Brennkraftmaschine bereitzustellen, wobei eine Lambdaregelung durch einen Systemkorrekturfaktor ergänzt wird, welcher unter Anwendung eines NN eine künftige Regelabweichung prädiziert und diese in der Art in die Lambdaregelung einbringt, sodass in der Zukunft liegenden Lambdaregelabweichungen bereits vor deren Entstehung entgegengewirkt wird, sowie ein Steuergerät zur Ausführung des erfindungsgemäßen Verfahrens auf einer Brennkraftmaschine und einer Brennkraftmaschine, die unter Anwendung des erfindungsgemäßen Verfahrens betrieben wird.

## Lösung der Aufgabe

Die Aufgabe wird durch ein Verfahren nach Anspruch 1, ein Steuergerät nach Anspruch 9 sowie eine Brennkraftmaschine nach Anspruch 10 gelöst.

## Darstellung und Vorteile der Erfindung

Der vorliegenden Erfindung liegt die Intention zu Grunde, einen bestehenden Regelkreislauf eines technischen Systems um ein NN zu ergänzen, welches einen Systemkorrekturfaktor berechnet, der einen Wert annimmt, um ein gewünschtes Verhalten einer Regelgröße des technischen Systems zu erhalten. In erster Linie besteht das gewünschte Verhalten hierbei aus der Minimierung der Regelabweichung der Regelgröße, unter Einbezug sämtlicher dem technischen System zugänglichen Informationen. In einer vorteilhaften Ausführungsform beeinflusst das NN die Regelgröße in der Art, dass ein gewünschtes Verhalten des gesamten technischen Systems erhalten wird.

In einer Ausführungsform ist das technische System eine Brennkraftmaschine und die Regelgröße der Lambdawert des Abgasmassenstromes, der sich stromabwärts eines Abgaskatalysators, innerhalb einer Abgasabführleitung, einstellt. Das gewünschte Verhalten der Regelgröße Lambda ist hierbei das Aufrechterhalten eines Lambda-Istwertes von 1, welches dem stöchiometrischen Verhältnis entspricht, sodass eine optimale Konvertierung der Abgasemissionen innerhalb des Abgaskatalysators erfolgt. Der Lambda-Istwert wird üblicherweise durch einen Sauerstoffsensor gemessen, der stromaufwärts des Abgaskatalysators, innerhalb der Abgasabführleitung angeordnet ist. Das NN berechnet nunmehr einen Systemkorrekturfaktor, der einer prognostizierten Regelabweichung von Lambda entspricht und vom technischen System der Brennkraftmaschine in der Art verarbeitet wird, dass die Regelabweichung von Lambda zukünftiger Betriebszustände der Brennkraftmaschine minimiert wird.

In einer alternativen Ausführungsform berechnet das NN einen Systemkorrekturfaktor, welcher anstelle einer zukünftigen Lambdaregelabweichung einem Wert entspricht, der nicht mehr darauf ausgelegt ist, die Lambdaregelabweichung zu minimieren, sondern unmittelbar darauf abzielt, das gesamte technische System in der Art zu beeinflussen, dass in jedem Betriebspunkt ein Lambda-Istwert von 1 entsteht. Zum besseren Verständnis und als Unterstützung der Beschreibung wird sich auf folgende Abbildungen bezogen. Hierbei zeigen:

Fig. 1    ein Regelsystem (3) innerhalb eines Steuergerätes (2) einer Brennkraftmaschine (1),
Fig. 2    den strukturellen Aufbau einer automatisierten Merkmalsauswahl für ein NN,
Fig. 3    ein NN zur Ausführung des erfindungsgemäßen Verfahrens,
Fig. 4    den Verfahrensablauf zum Optimieren des NN mittels Reinforcement Learning.

Das erfindungsgemäße Verfahren soll in vorteilhafter Art und Weise auf einem Steuergerät (2) einer nicht dargestellten Brennkraftmaschine (1) angewendet werden und die Berechnungen in Echtzeit durchführen. Um diese Anforderungen zu erfüllen, enthält das erfindungsgemäße Verfahren die folgende vorteilhafte Merkmalskombination:

- automatisierte Auswahl von Eingangsgrößen für das NN mittels Feature-Subsystem-Selection (FSS)
- Trainieren des NN mittels aufgezeichneten Messdaten
- Optimieren des NN auf das gesamte technische System der Brennkraftmaschine (1) mittels verstärkten Lernens (Reinforcement-Learning, RL)
- Vorhersage des Systemverhaltens in einem vom Betriebspunkt abhängigen Prädiktionshorizont
- Erzeugen eines Systemkorrekturfaktors zur unmittelbaren Beeinflussung des prädizierten zukünftigen Systemverhaltens

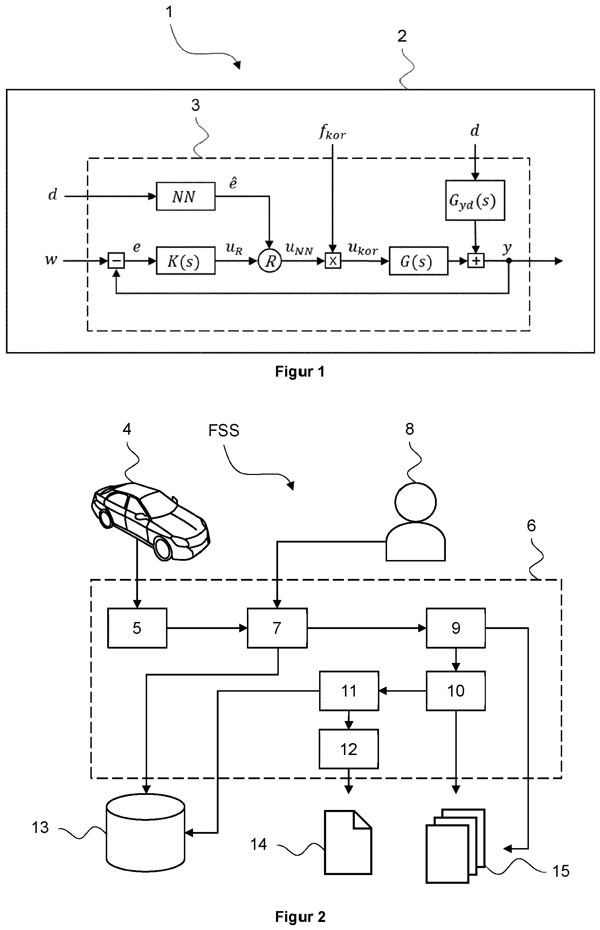

Gemäß Fig. 1 wird das erfindungsgemäße Verfahren auf dem Steuergerät (2) der Brennkraftmaschine (1) ausgeführt, wobei ein NN, wie nachfolgend beschrieben, in ein Regelsystem (3) integriert wird. Das erfindungsgemäße Steuergerät (2) umfasst hierbei wenigstens ein Regelsystem (3), welches eine Regelgröße (y) regelt. Hierfür entspricht eine erste Eingangsgröße dem Sollwert (w), welche in einem ersten Schritt mit dem Istwert der Regelgröße (y) abgeglichen wird, um eine Regelabweichung (e) zu bestimmen. Die Regelabweichung (e) ist die Eingangsgröße eines Kompensationsgliedes (K(s)). Das Kompensationsglied (K(s)) ist eingerichtet, um Berechnungen durchzuführen, um eine Reglerstellgröße ($u_R$) zu erzeugen. Die Art und Weise der Berechnungen, die im Kompensationsglied (K(s)) ausgeführt werden, sind zur Ausführung des erfindungsgemäßen Verfahrens unerheblich und können jedem bekannten oder individuell erstellten Aufbau entsprechen, sowie eine beliebige Anzahl an weiteren Eingangsgrößen verarbeiten. Die nach solcherart erzeugte Reglerstellgröße ($u_R$) kann in einem weiteren Schritt, in bekannter Art und Weise, mit adaptiven Korrekturfaktoren ($f_{kor}$) multipliziert werden, die der Driftkompensation dienen oder Änderungen im Langzeitverhalten des Regelsystems (3) berücksichtigen und entsprechend eine korrigierte Stellgröße ($u_{kor}$) ausgeben, welche die Eingangsgröße in die Regelstrecke (G(s)) stellt. Die Regelstrecke (G(s)) wird üblicherweise durch Störungen beeinflusst. Die Auswirkungen der Störungen können durch Störstrecken (Gyd(s)) beschrieben werden. Der Ausgang der Regelstrecke wird somit durch die Ausgänge der Störstrecken überlagert. Es resultiert die gemessene Regelgröße (y). Die Art der Regelstrecke (G(s)) sowie der einzelnen Störstrecken (Gyd(s)) sind zur Ausführung des erfindungsgemäßen Verfahrens unerheblich und können jedem bekannten oder individuell erstellten Aufbau entsprechen, sowie eine beliebige Anzahl an weiteren Eingangsgrößen verarbeiten. Die Gesamtheit der Störgrößen wird hierbei als Störung (d) zusammengefasst.

Ein soweit beschriebenes und bekanntes Regelsystem weist die genannten Nachteile der Systemdynamik des Sollwert (w) - Istwert (y) - Abgleichs und des reaktiven Verhaltens bezüglich unvorhersehbarer Störungen (d) auf. Als Abhilfe wird ein konventionell bestehendes Regelsystem nunmehr erfindungsgemäß vorteilhaft um ein NN erweitert, welches ebenfalls Störungen (d) als Eingangsgrößen verarbeitet und eine prädizierte Regelabweichung (ê) berechnet. Die prädizierte Regelabweichung (ê) wird in einer beliebigen Rechenoperation (R) mit der Reglerstellgröße ($u_R$) zusammengeführt und erzeugt auf diese Art und Weise einen Systemkorrekturfaktor oder auch eine NN-Stellgröße ($u_{NN}$), die durch das Regelsystem (3) nach bekannter Art weiterverarbeitet wird. Die prädizierte Regelabweichung (ê) soll dabei, basierend auf dem durch das NN gelernte Systemverhalten des technischen Systems, zukünftige Abweichungen der Regelgröße (y) vorhersagen und diesen entgegenwirken.

In einer vorteilhaften Ausführungsform des erfindungsgemäßen Verfahrens sind das Training und die Berechnung des NN in der Art ausgelegt, dass der Einfluss der prädizierten Regelabweichung (ê) die zukünftige eigentliche Regelabweichung (e) minimiert.

In einer alternativen vorteilhaften Ausführungsform des erfindungsgemäßen Verfahrens wird das NN mittels RL in der Art optimiert, dass dessen Ausgang eine gesamtheitliche Kompensationsgröße darstellt, die die prädizierte Regelabweichung (ê) minimiert.

In einer weiteren alternativen vorteilhaften Ausführungsform des erfindungsgemäßen Verfahrens sind das Training und die Berechnungen des NN in der Art ausgelegt, dass der Einfluss der prädizierten Regelabweichung (ê) den Wert einer weiteren Kenngröße des technischen Systems gezielt verändert und somit ein gewünschtes Systemverhalten erzeugt.

Vorzugsweise ist das technische System die Brennkraftmaschine (1) eines Fahrzeuges, wobei das Regelsystem (3) einer Lambdaregelung der Brennkraftmaschine (1) entspricht und auf einem fahrzeuginternen Steuergerät (2) ausgeführt wird, welches an der Brennkraftmaschine (1) oder zumindest innerhalb des Fahrzeuges angeordnet ist. Der Sollwert (w) entspricht hierbei einem Lambda-Sollwert ($\lambda_{soll}$), der beispielsweise aus einer Vorsteuerung innerhalb des Steuergerätes (2) berechnet sein kann. Die Regelgröße (y) entspricht nunmehr dem Lambda-Istwert ($\lambda_{ist}$), der durch einen Sauerstoffsensor bestimmt werden kann. Die Regelabweichung (e) entspricht somit der Differenz aus dem Lambda-Sollwert ($\lambda_{soll}$) und dem Lambda-Istwert ($\lambda_{ist}$). Das Kompensationsglied (K(s)) kann hierbei ein bekannter Lambdaregler sein und beispielsweise als ein PID-Regler, als ein "Internal-Model-Control" (IMC) oder ein sonstiges Regelverfahren ausgeprägt sein. Die Reglerstellgröße ($u_R$) kann einer physikalischen Kenngröße der Brennkraftmaschine (1) entsprechen, insbesondere dem Äquivalent einer Kraftstoffmenge, insbesondere einer einheitenlosen Kenngröße, wie einer relativen Kraftstoffmenge oder einer Kraftstoffrate, die dem prozentualen Anteil einer physikalischen Kraftstoffmenge oder Kraftstoffrate entspricht. Dementsprechend kann die durch das NN berechnete prädizierte Regelabweichung (ê) ein einheitenloser Zahlenwert sein, um das Äquivalent zur Kraftstoffmenge, unter Anwendung einer Rechenoperation (R), quantitativ zu beeinflussen. Die Rechenoperation (R) ist vorzugsweise eine Addition und kann alternativ auch jede weitere Rechenoperation (R) sein. Die NN-Stellgröße ($u_{NN}$) entspricht nunmehr einem durch das NN korrigierten Äquivalent der Kraftstoffmenge. Die NN-Stellgröße ($u_{NN}$) kann weiterhin durch einen oder mehrere Korrekturfaktoren ($f_{kor}$) korrigiert werden. Die Korrekturfaktoren ($f_{kor}$) können die Alterung der Brennkraftmaschine (1) sowie einzelner Komponenten von dieser berücksichtigen und/oder die thermische Alterung eines nicht dargestellten Abgaskatalysators oder der gesamten Abgasanlage darstellen. In einer Ausführungsform des erfindungsgemäßen Verfahrens ist wenigstens einer der Korrekturfaktoren ($f_{kor}$) eine Kenngröße, die ein Äquivalent der benötigten Luftmasse ($r_L$) abbildet, sodass die korrigierte Stellgröße ($u_{kor}$) einer benötigten relativen Kraftstoffmenge ($r_K$) entspricht.

In einer Ausführungsform umfasst die Störung (d) eine Vielzahl von physikalischen Kenngrößen, durch eine Software des Steuergerätes (2) gegebene Modellgrößen, durch das Steuergerät (2) verarbeitete Steuergerätkenngrößen und/oder durch Sensoren aufgenommene Messgrößen, welche im Folgenden mit dem Oberbegriff "Störgrößen (ds)" zusammengefasst werden. Die Eingangsgrößen des NN umfassen eine endliche Anzahl an Störgrößen ($d_s$), welche vorzugsweise erfindungsgemäß vorteilhaft mittels automatisierter Identifikation relevanter Messgrößen (Feature-Subsystem-Selection, FSS) ausgewählt werden.

In Fig. 2 ist der strukturelle Aufbau eines Systems zur Ausführung eines Verfahrensablaufs eines FSS-Prozesses dargestellt, wobei die Eingangsgrößen Messdaten (5) und gegebenenfalls Anforderungen an das Einsatzgebiet des technischen Systems sind, die von einem menschlichen Anwender (8) gestellt werden können. In einer Ausführungsform werden die Messdaten (5) während der Fahrt mit einem Fahrzeug (4) aufgenommen, auf dessen Brennkraftmaschine (1) das erfindungsgemäße Verfahren angewendet werden soll. Messdaten (5) und weitere Anforderungen können hierbei auf einer externen Verarbeitungseinheit (6) in einer Datenstruktur (7) gelagert werden, die eingerichtet ist, um eine Vielzahl an Messdaten (5) zusammenzuführen und für eine Weiterverarbeitung vorzubereiten. Die nach solcherart zusammengeführten Messdaten (5) können als Trainingsdaten in einer Datenbank (13) gespeichert werden. Die externe Verarbeitungseinheit (6) kann ein Server sein, auf dem die FSS automatisiert abläuft und auf den die Messdaten (5) übertragen werden können. Messdaten (5) im Sinne der Erfindung umfassen Zeitreihen von Messgrößen, Signalen oder Parametern, von durch die Software des Steuergerätes (2) der Brennkraftmaschine (1) gegebenen Modellgrößen, durch das Steuergerät (2) verarbeitete Steuergerätkenngrößen und/oder durch Sensoren aufgenommene Messgrößen. Messgrößen, Signale oder Parameter, die durch das Steuergerät (2) verarbeitet werden, werden nachfolgend als Messkenngrößen bezeichnet. Messkenngrößen umfassen somit Größen, die von einem Steuergerät (2) erfasst, verarbeitet und ausgegeben werden können.

Die Intention der FSS ist die automatisierte Auswahl von Messkenngrößen, deren Änderung einen möglichst großen Einfluss auf die Änderung oder den zeitlichen Verlauf der gewünschten Regelgröße (y) innehat. Hierfür können die Messdaten (5) in einen Datenfilter (9) übergeben werden, der eingerichtet ist, um zeitlich konstante Messkenngrößen zu identifizieren und aus den Messdaten (5) zu entfernen. Die nach solcherart entfernten Messkenngrößen können zu Dokumentationszwecken in eine Filtermatrix (15) geschrieben werden. Die nach solcherart gefilterten Messdaten (5) können weiterhin in einen Korrelationsfilter (10) übergeben werden, der eingerichtet ist, um Messkenngrößen zu filtern, deren zeitlicher Verlauf eine hohe Korrelation aufweist. Messkenngrößen, die einen gleichen oder ähnlichen zeitlichen Verlauf aufweisen, können nicht auf den ersten Blick für den Fachmann ersichtlich sein, da aktuelle Steuergeräte (2) eine Vielzahl an Messkenngrößen verarbeiten, die direkt oder indirekt voneinander abhängig sein können. Gleiche zeitliche Verläufe können somit einen redundanten Einfluss auf die Regelgröße (y) haben und würden bei paralleler Verarbeitung keinen Mehrwert liefern sowie die benötigte Rechenkapazität erhöhen. Die nach solcherart entfernten Messkenngrößen können zu Dokumentationszwecken in eine Filtermatrix (15) geschrieben werden. Die nach solcherart gefilterten Messdaten (5) können in einen Skalierungsfilter (11) übergeben werden, der eingerichtet ist, um die zeitlichen Verläufe einzelner Messdaten zu skalieren, um gleichwertig verarbeitbare Messdaten (5) zu erzeugen. In einer Ausführungsform werden zusätzlich die berechneten Gradienten der Messdaten hinterlegt. Die nach solcherart skalierten Messdaten (5) können als Trainingsdaten in der Datenbank (13) gespeichert werden. Die nach solcherart gefilterten Messdaten (5) können einem Kenngrößenauswahlfilter (12) übergeben werden, der eingerichtet ist, um den Einfluss der einzelnen Messkenngrößen innerhalb der vorhandenen Messdaten (5) auf die Regelgröße (y) zu analysieren und zusammen mit den Anforderungen des menschlichen Anwenders (8) eine bestimmte Anzahl an Messkenngrößen auszuwählen. Die nach solcherart gefilterten Messkenngrößen können in eine Störgrößenmatrix (14) geschrieben werden und gelten nunmehr als die Störgrößen (ds), die die Eingangsgrößen des NN darstellen.

Die Auswahl von einzelnen Störgrößen (ds) mittels FSS ist ein bekanntes Verfahren und der beschriebene strukturelle Aufbau soll das erfindungsgemäße Verfahren nicht einschränken, sondern ist lediglich als ein Ausführungsbeispiel zu verstehen. Alternativ kann jede weitere Form von FSS angewendet werden, um aus einer Vielzahl von zur Verfügung stehenden Messkenngrößen eines Steuergerätes (2) einer Brennkraftmaschine (1), aus einer beliebigen Anzahl von Messdaten (5) eine endliche Anzahl an Störgrößen (ds) zu identifizieren und zu extrahieren. In einer Ausführungsform ist die Anzahl der nach solcherart extrahierten Störgrößen (ds) kleiner als 1000, vorzugsweise kleiner 100.

Auf aktuellen Steuergeräten (2) wird eine Vielzahl von Messkenngrößen verarbeitet sowie innerhalb von Funktionen des Steuergerätes (2) neue Kenngrößen erzeugt und weiterverarbeitet, die auf den ersten Blick in keinem unmittelbaren physikalischen Zusammenhang mit der eigentlichen Regelgröße (y) stehen. In einer Ausführungsform, in der das technische System eine Brennkraftmaschine (1) und die Regelgröße (y) der Lambda-Istwert ($\lambda_{ist}$) ist, kann das durch die Verrechnung der Messkenngrößen oder der Darstellung in weiteren Kenngrößen innerhalb des Steuergerätes (2) zu unterschiedlichen Wirkungen der einzelnen Messkenngrößen auf den Lambda-Istwert ($\lambda_{ist}$) führen. Es existiert demnach eine Vielzahl an Messkenngrößen, deren Wirkung für den Fachmann aufgrund seiner Kenntnis über den Aufbau und die Funktionsweise der angewendeten Brennkraftmaschine (1) nicht direkt ersichtlich ist. Erfindungsgemäß vorteilhaft umfassen nach Mitteln der FSS identifizierte Messkenngrößen Messgrößen, Signale, Parameter oder weitere physikalische Kenngrößen, die bei den konventionellen Lambdaregelsystemen nicht berücksichtigt werden. Die ausgewählten Störgrößen (ds) gelten demnach nur für einen speziellen Aufbau einer Brennkraftmaschine (1) und im Zusammenhang mit deren Anwendung, die beispielsweise der Antrieb eines Fahrzeuges (4) sein kann. Für weitere Brennkraftmaschinen (1) mit einem unterschiedlichen Aufbau oder einer unterschiedlichen Anwendung können durch das Verfahren der FSS verschiedene spezielle Messkenngrößen ausgewählt werden, sodass die Auswahl dieser Störgrößen ($d_s$) automatisiert und anwendungsgerecht für das jeweilige technische System erfolgt. Brennkraftmaschinen (1), die sich im Sinne der Erfindung im Aufbau unterscheiden, können einen unterschiedlichen mechanischen Aufbau aufweisen oder, bei gleichem mechanischen Aufbau, Steuergeräte (2) mit unterschiedlicher Software umfassen. Brennkraftmaschinen (1), die sich im Sinne der Erfindung in ihrer Anwendung unterscheiden, können baugleiche Brennkraftmaschinen (1) sein, die in unterschiedlichen Fahrzeugen angeordnet sind oder die Teile in sich unterscheidenden Antriebssystemen sind.

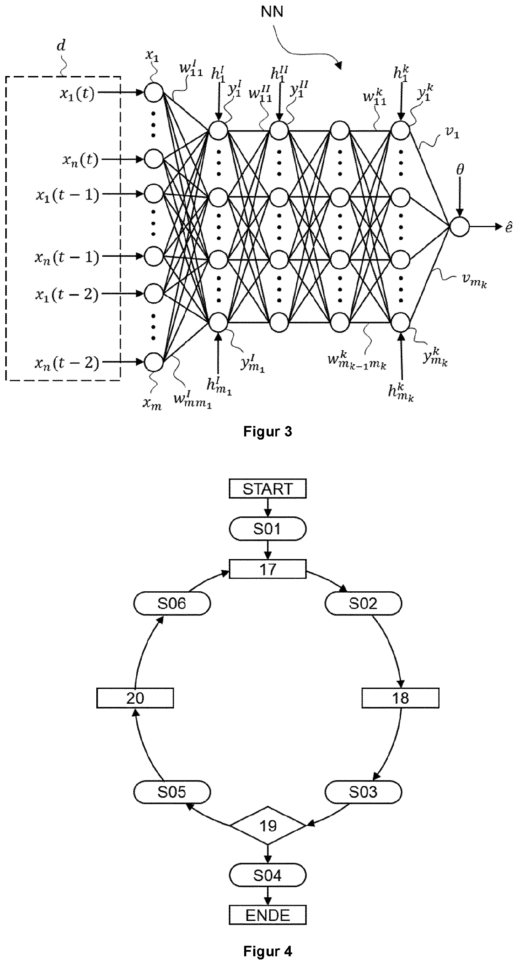

In Fig. 3 ist der strukturelle Aufbau eines NN dargestellt, das eingerichtet ist, um das erfindungsgemäße Verfahren auszuführen. Das NN umfasst eine Eingangsschicht, eine beliebige Anzahl k an versteckten Schichten sowie eine Ausgangsschicht. Die Eingangsgrößen ($x_n$) bestehen aus einer beliebigen Anzahl an Störgrößen (ds). Die Eingangsgrößen ($x_n$) bilden während der Echtzeitanwendung des erfindungsgemäßen Verfahrens einen zeitlichen Verlauf $x(t)$ ab. In einer vorteilhaften Ausführungsform des erfindungsgemäßen Verfahrens umfassen die Eingangsgrößen ($x_n$) zu jeder einzelnen Eingangsgröße $x_n(t)$ den vorherigen Zeitschritt $x_n(t - 1)$ sowie einen weiteren Zeitschritt davor $x_n(t - 2)$. Alternativ kann jede beliebige Anzahl an weiterzurückliegenden Zeitschritten als zusätzliche Eingangsgrößen ($x_n$) für das NN dienen. Durch die Verwendung von vorangegangenen Zeitschritten ($x_n(t - 1)$, $x_n(t - 2)$) berücksichtigt das erfindungsgemäße NN die unmittelbare Historie der durch das FSS als relevante Störgrößen ($d_s$) identifizierten Eingangsgrößen ($x_n$). Die Eingangsschicht des NN weist nunmehr eine Dimension von $x_m$ auf. In einer Ausführungsform, in welcher die durch das FSS identifizierten Störgrößen ($d_s$) eine Anzahl von 30 aufweisen, und die letzten beiden Zeitschritte ($x_n(t - 1)$, $x_n(t - 2)$) der Zeitreihenhistorie der Eingangsgrößen ($x_n$) berücksichtigt werden, umfasst die Dimension der Eingangsschicht entsprechend eine Größe von m = 90.

Jede versteckte Schicht k umfasst eine beliebige Anzahl $m_k$ an Neuronen $y_{m_k}^k$, wobei jedem Neuron $y_{m_k}^k$ ein Schwellwert $h_{m_k}^k$ sowie Gewichte $w_{m_{k-1},m_k}^k$ zugeordnet sind, die einer Anzahl $m_k$ an Neuronen entsprechen, die der Dimension $m_{k-1}$ der vorherigen Schicht k-1 entspricht. Der Ausgang eines beliebigen Neurons $y_{m_k}^k$ des NN berechnet sich entsprechend nach Gl. 1, wie folgt:

$$y_{m_k}^k = f_a\left(\sum_{i=1}^{m_{k-1}} y_i^{k-1} w_{i\,m_k}^k - h_{m_k}^k\right) \qquad \text{(Gl. 1)}$$

Hierbei ist $f_a$ die Aktivierungsfunktion der Neuronen $y_{m_k}^k$. In einer Ausführungsfunktion des erfindungsgemäßen Verfahrens wird die Aktivierungsfunktion $f_a$ nach Gl. 2 berechnet.

$$f_a = \sigma(x) = \max(0, x) \qquad \text{(Gl. 2)}$$

Alternativ kann jede weitere Aktivierungsfunktion verwendet werden, die geeignet ist, um ein NN in bekannter Art und Weise zu berechnen. Die Ausgangsschicht besteht aus einem Neuron, dessen Ausgang die prädizierte Regelabweichung ê umfasst. Die prädizierte Regelabweichung ê berechnet sich nach Gl. 3 wie folgt.

$$\hat{e} = f_e\left(\sum_{i=1}^{m_k} y_i^k v_i^k - \theta\right) \qquad \text{(Gl. 3)}$$

Hierbei entspricht $f_e$ der Aktivierungsfunktion der Ausgangsschicht, $v_i$ den Gewichten der Ausgangsschicht, die einer maximalen Anzahl $m_k$ der Dimension der letzten versteckten Schicht k entsprechen sowie dem Schwellenwert $\theta$ der Ausgangsschicht. In einer Ausführungsform des erfindungsgemäßen Verfahrens entspricht die Aktivierungsfunktion der Ausgangsschicht $f_e$ der Aktivierungsfunktion der verdeckten Schichten $f_a$, sodass Gl. 4 gilt.

$$f_e = f_a = \sigma(x) = max(0, x) \qquad \text{(Gl. 4)}$$

Alternativ kann für $f_e$ jede weitere Aktivierungsfunktion verwendet werden, die geeignet ist, um NN in bekannter Art und Weise zu berechnen. In einer Ausführungsform weisen die verdeckten Schichten k eine endliche Anzahl auf, die kleiner als 100, vorzugsweise kleiner als 10, insbesondere vorzugsweise kleiner als 5 ist. Hierbei umfassen die verdeckten Schichten Dimensionen $m_k$, die jeweils eine maximalen Anzahl an Neuronen $y_{mk}^k$ umfasst, die kleiner als 1000, vorzugsweise kleiner oder gleich 100 ist.

In einer Ausführungsform umfassen die Eingangsgrößen ($x_n$) die für die Lambdaregelung bekannten physikalischen Größen Motordrehzahl, Motordrehmoment, Ansaugluftdruck, Ansauglufttemperatur, Drosselklappenstellung, Kühlmitteltemperatur, AGR-Rate, Lambda-Istwert, Lambda-Sollwert, Kraftstoffeinspritzmenge-Istwert, Kraftstoffeinspritzmenge-Sollwert sowie Zylinderinnendruck.

In einer vorteilhaften Ausführungsform umfassen die Eingangsgrößen ($x_n$) nach FSS identifizierte Störgrößen (ds), die weitere Messkenngrößen umfassen, die den Gruppen der Motorverbrennung, dem Luftpfad, dem Tanksystem, dem Einspritzsystem, der Motoraufladung sowie der Abgasnachbehandlung zugeordnet werden können. Insbesondere kann es sich dabei um Messwerte, Sensorwerte, Modellwerte sowie MSG-Werte handeln. Im Sinne der Erfindung können Messwerte Messkenngrößen, die aus der Messung durch ein Messmittel, wie einen Sensor oder ähnliches stammen und innerhalb des Steuergerätes weiterverarbeitet wurden, wie Massenströme, mathematisch gefilterte oder normierte physikalische Messkenngrößen und weitere sein. Im Sinne der Erfindung können Sensorwerte Messkenngrößen, die Äquivalente von realen physikalischen Größen sind, die unmittelbar durch einen Sensor erfasst werden, wie Drücke, Temperaturen und weitere sein. Im Sinne der Erfindung können Modellwerte Messkenngrößen, die physikalischen Kenngrößen, Messwerte, Sensorwerte oder weitere abbilden, die jedoch nicht unmittelbar aus gemessenen Messkenngrößen hervorgehen, sondern durch mathematische Modelle geschätzt werden, wie modellierte Massenströme oder Drücke, Gemischzusammensetzung und weitere. Im Sinne der Erfindung können MSG-Werte durch das Steuergerät (2) der Brennkraftmaschine (1) berechnete Größen, welche ebenfalls Messkenngrößen abbilden können oder die zeitlichen Verläufe von Stell- oder Regelgrößen umfassen, sein.

Um das nach solcherart erzeugte NN in der Anwendung einzusetzen, wird es gemäß Fig. 4 mittels verstärkendem Lernen, oder mit anderen Worten Reinforcement-Learning (RL), optimiert. In einem ersten Schritt (S01) wird ein initial erzeugtes NN in ein Steuergerät (2) einer Brennkraftmaschine (1) eines Fahrzeuges (4) integriert. Das initial erzeugte NN kann mittels Messdaten vortrainiert sein. In einer Ausführungsform kann das NN softwareseitig als Bypass in die existierende Software des Steuergerätes (2) integriert werden, sodass reale Messergebnisse durch das NN erhalten werden, diese jedoch den Betrieb des Fahrzeuges (4) oder der Brennkraftmaschine (1) wahlweise nicht oder wahlweise explizit beeinträchtigen können. Alternativ kann das NN direkt in die bestehende Software integriert werden, in der Art, dass die berechnete prädizierte Regelabweichung (ê) in die Berechnungen der Lambdaregelung einfließt und einen unmittelbaren Einfluss auf den Betrieb des Fahrzeuges (4) oder der Brennkraftmaschine (1) innehat. In einem weiteren Schritt (S02) werden Messfahrten mit dem Fahrzeug mit NN (17) durchgeführt, um Messdaten (18) zu erzeugen. In einem weiteren Schritt (S03) werden die Messdaten (18) ausgewertet und bewertet. Die Auswertung der Messdaten (18) kann der Abgleich der Messergebnisse, insbesondere der Ausgang des NN sowie die dadurch erzielte Differenz zwischen Lambda-Sollwert ($\lambda_{soll}$) und Lambda-Istwert ($\lambda_{ist}$) absolut oder im Vergleich zu aufgestellten Anforderungen sein. In einer Ausführungsform kann eine aufgestellte Anforderung den Vergleich bezüglich der konvertierten Emissionen in einem Abgaskatalysator umfassen. Hierfür können verschiedene Vergleichskenngrößen oder Kriterien herangezogen werden. Ein Kriterium kann ein Gütekriterium sein, das den relativen Befüllungsgrad des Abgaskatalysators bestimmt oder dessen Änderung.

Der relative Befüllungsgrad eines Abgaskatalysators ist dem Fachmann bekannt als die prozentuale Darstellung der sich in einem Abgaskatalysator befindlichen Sauerstoffmenge. Es ist weiterhin bekannt, dass beispielsweise ein relativer Befüllungsgrad von $L_{O2}$ = 0,5 bei einem Dreiwegekatalysator eines Ottomotors zu einem Optimum der Konvertierung der Schadstoffe Kohlenwasserstoff (HC), Kohlenstoffmonoxid (CO) sowie von Stickstoffoxiden ($NO_x$) führt. Das bedeutet, dass beispielsweise bei einer betriebspunktabhängigen Speicherkapazität eines Dreiwegekatalysators bei einer Sauerstoffmenge von $m_{O2}$ = 1g liegt, die ideale Sauerstoffbefüllung $0,5g_{O2}$ ist. Die Änderung der aktuellen Sauerstoffmenge ($m_{O2}$) lässt sich nach Gl. 5 bilanzieren.

$$ m_{o2} = 0,23 \int_{t_0}^{t_1} 14,7 \frac{\lambda_{ein} - 1}{1 + 14,7\lambda_{ein}} \dot{m}_{Abg} dt \qquad \text{(Gl. 5)} $$

Hierbei entspricht $\lambda_{ein}$ dem Lambdawert des Abgasmassenstroms ($m_{Abg}$), der dem Dreiwegekatalysator zugeführt wird. Der Lambdawert ($\lambda_{ein}$) stromaufwärts des Dreiwegekatalysators kann vorzugsweise mit einem Sauerstoffsensor ermittelt werden, der stromaufwärts des Dreiwegekatalysators angeordnet ist. Mögliche Kriterien über den Vergleich einer konventionellen Lambdaregelung (3) und dem erfindungsgemäßen Verfahren sollen nicht auf das hier abgebildete Gütekriterium beschränkt sein. Alternativ können weitere Kriterien aufgestellt werden, sowie jede Art von Brennverfahren der Brennkraftmaschine (1) sowie jede Form und jeder Aufbau von Abgaskatalysatoren verwendet werden.

Die Bewertung der Messdaten (18) und des NN, gemäß dem Schritt (S03), kann durch den menschlichen Anwender (8) ausgeführt werden. Dieser kann hierbei insbesondere prüfen, ob das Ergebnis des erfindungsgemäßen Verfahrens den aufgestellten Anforderungen entspricht oder ob das NN weiter optimiert werden soll (19). Werden die Anforderungen erfüllt oder weist das NN der aktuellen Optimierungsiteration kein oder lediglich ein unwesentlich verbessertes Ergebnis auf, kann das RL in einem weiteren Schritt (S04) beendet werden. Besteht weiterhin Verbesserungspotential, wird das NN in einem weiteren Schritt weiter trainiert (S05), in dem die Gewichte oder weitere Parameter des NN angepasst werden. Das nach solcherart neu trainierte NN (20) wird in einem weiteren Schritt (S06) erneut in das Fahrzeug (17) integriert und eine weitere Iteration der Auswertung und Bewertung kann durchgeführt werden. In einer Ausführungsform des erfindungsgemäßen Verfahrens wird das NN während des Trainings (S05) darauf gelernt, den Fehler der Lambdaregelung (3) und damit die Regelabweichung (e) vorherzusagen und eine prädizierte Regelabweichung (ê) zu erzeugen, um den zukünftigen Fehler der Lambdaregelung (3) zu minimieren.

In einer vorteilhaften Ausführungsform wird das NN darauf trainiert (S05), anstelle einer prädizierten Regelabweichung (ê) der Lambdaregelung (3) einen Systemkorrekturfaktor ($f_{NN}$) zu erzeugen, um in zukünftigen Zeitschritten die Brennkraftmaschine (1) in der Art zu beeinflussen, um eine Regelabweichung (e) von 0 zu erzeugen. Alternativ kann das NN darauf trainiert (S05) werden, um in einem zukünftigen Zeitschritt eine Sauerstoffbefüllung ($m_{O2}$) des Abgaskatalysators von einem bestimmten Wert, vorzugsweise von 0,5 der betriebspunktabhängigen maximalen Sauerstoffbeladung, zu erzeugen. Alternativ kann das NN darauf trainiert (S05) werden, einen Lambda-Istwert ($\lambda_{ist}$) von einem bestimmten Wert, vorzugsweise 1, zu erzeugen.

Gemäß Fig. 1 wird der Ausgang (ê) des NN erfindungsgemäß mit der Stellgröße ($u_R$) verrechnet, die die Ausgangsgröße des Kompensationsgliedes (K(s)) ist. Da aufgrund der Anwendung von FSS, gemäß Fig. 2, eine endliche Anzahl an unterschiedlichen Messkenngrößen der Brennkraftmaschine (1) als Störgrößen (ds) bzw. als Eingangsgrößen (x(t)) für das NN berücksichtigt werden können, können einzelne Eingangsgrößen (x(t)) ein besonders dynamisches Zeitverhalten aufweisen. Auf diese Art und Weise in das NN eingebrachte Oszillationen können sich bis zur Ausgangsgröße (ê) des NN fortpflanzen und die gesamte Lambdaregelung (3) zum Oszillieren anregen. Um diesem Effekt entgegenzuwirken, kann in einer Ausführungsform des erfindungsgemäßen Verfahrens wenigstens eine Eingangsgröße (x(t)) oder die Ausgangsgröße mathematisch geglättet werden. Die Auswahl der Eingangsgrößen (x(t)), die geglättet werden sollen, sowie die Auswahl des mathematischen Verfahrens der Glättung kann durch den menschlichen Anwender des NN erfolgen.

Das erfindungsgemäße Verfahren lässt sich ohne zusätzlich benötigte Peripherie in ein vorhandenes Steuergerät (2) einer Brennkraftmaschine (1) eines Fahrzeuges (4) integrieren und darauf anpassen. In einer Ausführungsform, in der bei der konventionellen Lambdaregelung der vorhandenen Brennkraftmaschine (1) eine variable Streckenzeitkonstante angewendet wird, kann das erfindungsgemäße Verfahren in vorteilhafter Art und Weise einen oder mehrere Zeitschritte der Regelabweichung (e) vorhersagen und entsprechend beeinflussen.

**Ausführungsbeispiel**

Weitere Merkmale, Anwendungsmöglichkeiten und Vorteile der Erfindung ergeben sich aus der nachfolgenden Beschreibung eines Ausführungsbeispiels der Erfindung unter Bezugnahme auf die schematisch dargestellten Zeichnungen. Hierbei zeigt:

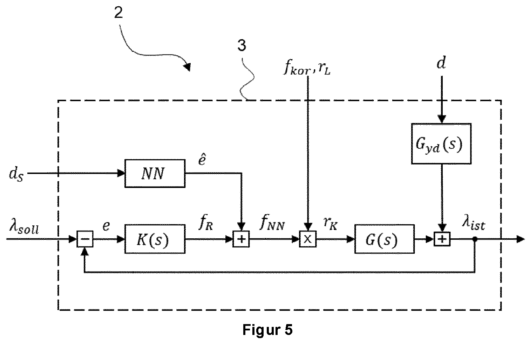

Fig. 5 die Lambdaregelung einer Brennkraftmaschine.

In Fig. 5 ist der strukturelle Aufbau einer erfindungsgemäßen Lambdaregelung (3) einer Brennkraftmaschine (1) dargestellt. In diesem Ausführungsbeispiel ist die Brennkraftmaschine (1) ein Ottomotor. Die Regelgröße ist hierbei der Lambda-Istwert ($\lambda_{ist}$) und der Sollwert ist der Lambda-Sollwert ($\lambda_{soll}$) als eine erste Eingangsgröße in die Lambdaregelung (3). Die Regelabweichung (e) wird aus der Differenz des Lambda-Sollwertes ($\lambda_{soll}$) mit dem Lambda-Istwert ($\lambda_{ist}$) gebildet und in das Kompensationsglied (K(s)) geführt. Das Kompensationsglied (K(s)) ist eingerichtet, um Berechnungen durchzuführen, um den konventionellen Reglerstellwert ($f_R$) für das Steuergerät (2) zu erzeugen. Die Art und Weise der Berechnungen, die im Kompensationsglied (K(s)) ausgeführt werden, sind zur Ausführung des erfindungsgemäßen Verfahrens unerheblich und können jedem bekannten oder individuell erstellten Aufbau entsprechen, sowie eine beliebige Anzahl an weiteren Eingangsgrößen verarbeiten. Weitere Eingangsgrößen stellen die Störgrößen (ds) dar, die eine spezifische Auswahl an Eingangsgrößen ($x_n$) für das NN umfassen. Die Störgrößen (ds) werden erfindungsgemäß vorteilhaft mittel FSS gemäß Fig. 2 identifiziert. Eine beispielhafte Auswahl an Störgrößen (ds) für die ausgewählte Brennkraftmaschine (1) ist in Tabelle 1 veranschaulicht. Es handelt sich hierbei beispielhaft um einen Ottomotor in V-Bauweise mit zwei Zylinderbänken, wobei das erfindungsgemäße Verfahren beispielhaft für die erste Zylinderbank (Bank 1) und die sich dafür anschließende Abgasabführleitung angewendet wird. Die FSS hat hierbei 29 Messkenngrößen als Eingangsgrößen ($x_n$) identifiziert. Diese sind zum besseren Verständnis gemäß Tabelle 1, Spalte 1 benannt, nach Spalte 2 in funktionstechnische Gruppen eingeteilt.

**Tabelle 1**

| Bezeichnung | Gruppe |
|---|---|
| Lambda-Regler-Ausgang | Abgasanlage |
| Lambdaregelabweichung | Abgasanlage |
| Gradient Abgasvolumenstrom Bank 1 | Abgasanlage |
| relativer Isthub ATL-Steller | Aufladung |
| gefilterter Raildruck Istwert | Einspritzsystem |
| Istposition Einlassventil Bank 1 | Einspritzsystem |
| Phasenstellerposition Sollwert Auslassnockenwelle Bank 1 | Einspritzsystem |
| relative Kraftstoffmenge | Einspritzsystem |
| Korrektur relative Kraftstoffmenge | Einspritzsystem |
| Luftdruck im Kurbelgehäuse | Luftpfad |
| Gradient Saugrohrdruck Sollwert | Luftpfad |
| Drosselklappen Abgleich Integrator | Luftpfad |
| Korrekturfaktor Massenstrom Nebenfüllungssignal Bank 1 | Luftpfad |
| Ansauglufttemperatur vor Drosselklappe | Luftpfad |
| Ansauglufttemperatur vor Drosselklappe, Bank 2 | Luftpfad |
| prädizierter Massenstrom Drosselklappe, Bank 1 | Luftpfad |
| minimaler modellierter Saugrohrdruck gefiltert | Luftpfad |
| maximaler modellierter Saugrohrdruck gefiltert | Luftpfad |
| Druck vor Drosselklappe | Luftpfad |
| Drosselklappen position | Luftpfad |
| Massenstrom durch Tankentlüftungsventil | Tanksystem |
| relativer Gemischanteil Tankentlüftung | Tanksystem |
| maximal zulässiger Ladedruck | Verbrennung |
| erwartete Verbrennungslautstärke | Verbrennung |
| Ist-Reduzierstufe | Verbrennung |
| Drehmoment Offset-Vorsteuerungsberechnung | Verbrennung |
| Partialdruck inertes AGR Sollwert im Brennraum | Verbrennung |

| Bezeichnung | Gruppe |
|---|---|
| Luftfüllung Sollwert maximal zulässiger Saugrohrdruck | Verbrennung |
| Zylinderabschaltung | Verbrennung |

Der Lambda-Regler-Ausgang entspricht dem konventionellen Reglerstellwert ($f_R$). Dieser ist Teil der Lambdaregelung (3) und wird hierbei, entsprechend seiner funktionellen Wirkung auf einen Dreiwegekatalysator, der Gruppe der Abgasanlage zugeordnet. Die Lambdaregelabweichung (e) ist ebenfalls Teil der Lambdaregelung (3). Eine weitere Messkenngröße der Gruppe Abgasanlage wird als der Gradient des Abgasvolumenstroms der ersten Zylinderbank bezeichnet. In der Gruppe der Motoraufladung wurde durch das FSS erfindungsgemäß eine Messkenngröße, der relative Hub des Abgasturboladerstellers als Istwert identifiziert. Für die Gruppe des Einspritzsystems wurden 5 Messkenngrößen identifiziert. Diese umfassen hierbei den mathematisch gefilterten Druck innerhalb des Rails des Common-Rail-Systems als Istwert, die Position des aktuellen Einlassventils der ersten Zylinderbank als Istwert, die Phasenstellerposition der Auslassnockenwelle der ersten Zylinderbank als Sollwert, die relative Kraftstoffmenge sowie die Korrektur der relativen Kraftstoffmenge, die gemäß Fig. 5 einem der Korrekturfaktoren $f_{kor}$ entsprechen kann.

Für die Gruppe des Luftpfades wurden 11 Messkenngrößen ausgewählt. Sie umfassen hierbei den Druck vor der Drosselklappe, die aktuelle Drosselklappenposition, den Luftdruck im Kurbelgehäuse, den prädizierten Massenstrom der Ansaugluft über die Drosselklappe der ersten Zylinderbank, den minimalen und maximalen Saugrohrdruck modelliert und mathematisch gefiltert, den Gradient des Saugrohrdrucks als Sollwert, den mathematischen Integrator des Drosselklappenabgleichs, den Korrekturfaktor des Massenstroms des Nebenfüllungssignals der ersten Zylinderbank, die Ansauglufttemperatur vor der Drosselklappe für beide Zylinderbänke identifiziert.

Das Verfahren der FSS gemäß Fig. 2 hat weiterhin Messkenngrößen des Tanksystems ausgewählt, welche den Massenstrom durch das Tankentlüftungsventil sowie den relativen Luft-Kraftstoff-Gemischanteil der Tankentlüftung umfassen.

Für die Gruppe der ottomotorischen Verbrennung wurden 7 Messkenngrößen ausgewählt, die den maximal zulässigen Ladedruck im aktuellen Betriebszustand, die erwartete Verbrennungslautstärke, einen Wert für das Drehmoment zur Offset-Vorsteuerungsberechnung, die Reduzierstufe als Istwert, welche die aktuelle Zylinderausblendung definiert, den Partialdruck des inerten Gases aus der Abgasrückführung (AGR) im Brennraum als Sollwert, die Luftfüllung bei maximal zulässigem Saugrohrdruck als Sollwert sowie die Zylinderabschaltung umfassen.

Somit wurden u.a. Messkenngrößen als relevante Störgrößen (ds) identifiziert, die auf den ersten Blick nicht unmittelbar die Berechnung der Lambdaregelung (3) zu beeinflussen scheinen, jedoch innerhalb der verzweigten Berechnungs- und Funktionsstrukturen des Steuergerätes (2) des ausgewählten Ottomotors quantitative Auswirkungen auf die Lambdaregelung (3) innehaben. Diese 29 Messkenngrößen werden in Summe als Eingangsgrößen ($x_n$) für das NN ausgewählt. Das NN umfasst einen prinzipiellen Aufbau gemäß Fig. 3 und weist die nachfolgend beschriebenen Hyperparameter auf. Als Eingangsgrößen werden die zeitlichen Verläufe x(t) der 29 Eingangsgrößen $x_1(t)$, ..., $x_{29}(t)$ verwendet. Das Steuergerät führt die Berechnungen der Lambdaregelung in einem zeitlichen Raster von 10ms aus. Erfindungsgemäß vorteilhaft werden zusätzlich die Werte der letzten beiden Zeitschritte $x_1(t-1)$, ..., $x_{29}(t-1)$ sowie $x_1(t-2)$, ..., $x_{29}(t-2)$, dementsprechend der letzten -10ms sowie der letzten -20ms berücksichtigt, sodass sich die Dimension der Eingangsschicht zu 87 ergibt. Entsprechend ergeben sich die Eingänge der Eingangsschicht zu $x_1$, ..., $x_{87}$.

Die nach solcherart entstandene Eingangsschicht wird auf ein NN angewendet, welches vorzugsweise einem Aufbau nach Fig. 3 entspricht. Die Auswahl der Anzahl an verdeckten Schichten sowie die Anzahl der Neuronen obliegt dem menschlichen Anwender, wodurch die Parameter der Gewichte und Schwellwerte implizit gegeben sind. Generell ist dem Fachmann die Vorgehensweise zur Erzeugung eines NN bekannt.

Gemäß Fig. 5 wird das erfindungsgemäße NN nunmehr in der Art angewendet, dass es eine prädizierte Regelabweichung (ê) berechnet, die auf den Reglerstellwert ($f_R$) addiert wird, wodurch der Systemkorrekturfaktor oder auch NN-Stellwert ($f_{NN}$) erzeugt wird. Das NN wurde im Vorfeld der Anwendung per RL, gemäß Fig. 4, darauf optimiert, die Lambdaregelabweichung (e) zukünftiger Zeitschritte vorherzusagen und daraus einen Wert für die prädizierte Regelabweichung (ê) zu bestimmen, der die Lambdaregelung (3) dahingehend beeinflusst, dass die zukünftige Lambdaregelabweichung (e) gleich 0 wird. Der nunmehr durch das NN berechnete NN-Stellwert ($f_{NN}$) wird weiterhin mit diversen Korrekturfaktoren ($f_{kor}$) multipliziert oder addiert, welche softwarespezifisch für das verwendete Steuergerät (2) der verwendeten Brennkraftmaschine (1) sind. Einer dieser Faktoren ($f_{kor}$) ist hierbei die relative Luftmenge ($r_L$), welche in der Berechnung einheitenlos ist, sodass die Multiplikation aus dem NN-Stellwert ($f_{NN}$), den Korrekturfaktoren ($f_{kor}$) sowie der relativen Luftmenge ($r_L$) die relative Kraftstoffmenge ($r_K$) ergibt, welche als Eingangsgröße für die Regelstrecke (G(s)) dient und die Berechnung der Lambdaregelung gemäß Fig. 1 weiterführt.

Das erfindungsgemäße Verfahren weist in vorteilhafter Art und Weise ein verbessertes Reglerverhalten auf, als konventionelle Anwendungen. Für das Beispiel eines Lastsprunges, beginnend mit einer relativen Luftmenge von

$r_L = 1$, auf beispielsweise ca. 20% der ursprünglichen Last, ist bei einer konventionellen Lambdaregelung (3) zu erwarten, dass zu Beginn des Lastsprungs der Lambda-Istwert ($\lambda_R$) zunächst in den fetten Bereich driften, sowie anschließend durch einen mäßigen Eingriff des Reglerstellwertes ($f_R$) in den mageren Bereich überschwingen wird und zu oszillieren beginnt. Dies führt im weiteren Verlauf dazu, dass der Lambda-Istwert ($\lambda_R$) zunächst verhältnismäßig zu fett gegenüber dem Sollwert ($\lambda_{soll}$) von 1 und im Zuge der anhaltenden Dynamik des Überschwingens zu mager sein wird. Es ist anzunehmen, dass der konventionelle Regler der Dynamik dieses Lastsprungs nicht schnell genug folgen kann, wodurch die Reglereingriffe begrenzt sind und nicht die erwünschte Wirkung entfalten können. Das erfindungsgemäße Verfahren hingegen wird zu Beginn des Lastsprungs einen deutlich verstärkten Reglereingriff durch den NN-Stellwert ($f_{NN}$) ausführen, dessen Intensität sich über die Dauer der Regelung fortsetzt. Der verstärkte Eingriff führt zu einer höherfrequenten Oszillation des Lambda-Istwertes ($\lambda_{NN}$), der jedoch über den gesamten Verlauf lediglich eine geringe Abweichung vom Lambda-Sollwert ($\lambda_{soll}$) annehmen wird. Weiterhin wird der qualitative Verlauf des Reglereingriffs, mit dem Äquivalent des NN-Stellwertes ($f_{NN}$), dem zeitlich versetzten qualitativen Verlauf des Lambda-Istwertes ($\lambda_R$) der konventionellen Lambdaregelung (3) entsprechen. Das erfindungsgemäße Verfahren prädiziert demnach erfindungsgemäß vorteilhaft die zukünftige Regelabweichung (e) der konventionellen Lambdaregelung (3) und steuert dieser aktiv entgegen, anstatt lediglich darauf zu reagieren.

Das führt in der quantitativen Bewertung des Gütekriteriums dazu, dass bei einem Betriebspunkt der Brennkraftmaschine (1) mit konstanter Last sowie einem stöchiometrischen Lambda von 1, unmittelbar vor dem Lastsprung, die Abweichung der Sauerstoffmenge ($m_{O2}$) entsprechend nahe 0 sein wird. Generell wird bei Anwendung des erfindungsgemäßen Verfahrens keine wesentliche Änderung von diesem Zustand entstehen und somit kommt es zu keiner nennenswerten Abweichung von der optimalen Sauerstoffbeladung des Dreiwegekatalysators. Hingegen wird die konventionelle Lambdaregelung (3) zu Beginn des Lastsprungs zunächst eine kleine negative Abweichung der optimalen Sauerstoffmenge ($m_{O2}$) aufweisen, welche zunächst durch den Reglereingriff und die Gasdynamik wieder ausgeglichen wird. Durch den jedoch vorhandenen Überschwinger des Lambda-Istwertes ($\lambda_R$) im Fettbereich wird der nutzbare Sauerstoffanteil im Dreiwegekatalysator im weiteren zeitlichen Verlauf vermehrt abgebaut werden, was zu einer erhöhten negativen Abweichung zur optimalen Sauerstoffmenge ($m_{O2}$) führen wird. Die Abweichung wird sogar einen so hohen Betrag aufweisen, dass auch der Überschwinger in den Magerbereich noch nicht zu einer Regeneration an Sauerstoff im Dreiwegekatalysator führen wird. Vielmehr wird die Abweichung zur optimalen relativen Sauerstoffmenge ($m_{O2}$) durch den konventionellen Reglereingriff eher träge ausgeregelt werden.

**Bezugszeichenliste**

1    Brennkraftmaschine
2    Steuergerät
3    Regelsystem/Lambdaregelung
4, 17    Fahrzeug
5    Messdaten
6    externe Verarbeitungseinheit
7    Datenstruktur
8    Anwender
9    Datenfilter
10    Korrelationsfilter
11    Skalierungsfilter
12    Kenngrößenauswahlfilter
13    Datenbank
14    Störgrößenmatrix
15    Filtermatrix
18    Messdaten
19    Gütekriterium
20    neu trainiertes NN
AGR    Abgasrückführung
CO    Kohlenstoffmonoxid
d    Störung
ds    Störgrößen
e    Regelabweichung
ê    prädizierte Regelabweichung
$f_a$    Aktivierungsfunktion verdeckte Schichten
$f_e$    Aktivierungsfunktion Ausgangsschicht

$f_{kor}$     Korrekturfaktor

$f_{NN}$     System korrekturfaktor

$f_R$     Reglerstellwert

FSS     Feature-Subsystem-Selection

$G(s)$     Regelstrecke

$G_{yd}(s)$     Störstrecke

HC     Kohlenwasserstoff

$h_i^k$     Schwellwert verdeckte Schicht

IMC     Internal-Model-Control

k     Anzahl verdeckter Schichten

$K(s)$     Kompensationsglied

$L_{O2}$     relativer Befüllungsgrad

m     Dimension Eingangsschicht

$\dot{m}_{abg}$     Abgasmassenstrom

$m_K$     Anzahl Neuronen der k-ten Schicht

$m_{O2}$     Sauerstoffmenge

n     Anzahl Eingangsgrößen

NN     Neuronales Netz

NOx     Sickstoffoxide

Np     Anzahl Gewichte NN

R     Rechenoperation

$r_K$     relative Kraftstoffmenge

$r_L$     relative Luftmenge

RL     Reinforcement-Learning

t     Zeit

$t_R$     Rechenzeit

$u_{kor}$     korrigierte Stellgröße

$u_{NN}$     NN-Stellgröße

$u_R$     Reglerstellgröße

$v_i$     Gewicht Ausgangsschicht

w     Sollwert

$w_i^k$     Gewicht verdeckte Schicht

$x_n$     Eingangsgrößen

y     Regelgröße

$y_i^k$     Neuron

$\theta$     Schwellwert Ausgangsschicht

$\lambda_{ein}$     Lambda Abgaskatalysator zugeführtes Abgas

$\lambda_{ist}, \lambda_R, \lambda_{NN}$     Lambda-Istwert

$\lambda_{soll}$     Lambda-Sollwert

S01, S06     in Steuergerät integrieren

S02     Messfahrten durchführen

S03     Messdaten evaluieren

S04     RL beenden

S05     NN trainieren

**Patentansprüche**

1. Computerimplementiertes Verfahren zum Betreiben einer Brennkraftmaschine (1), wobei eine Lambdaregelung innerhalb eines Regelsystems (3) eines Steuergerätes (2) ausgeführt wird, das ein neuronales Netz (NN) umfasst, das verwendet wird, um einen Systemkorrekturfaktor ($f_{NN}$) zur Korrektur der Berechnung einer relativen Kraftstoffmenge ($r_K$) zu bestimmen, **dadurch gekennzeichnet, dass**

• vor dem Betreiben der Brennkraftmaschine (1) die Schritte:

- automatisierte Auswahl einer endlichen Anzahl an Eingangsgrößen ($x_n$) für das neuronale Netz (NN) mittels Feature-Subsystem-Selection (FSS);
- Optimieren des neuronalen Netzes mittels verstärkenden Lernens (Reinforcement-Learning, RL);
- Bewertung des optimierten neuronalen Netzes bezüglich des Einflusses auf eine Regelgröße (y) des Regelsystems (3);

• sowie, dass während des Betreibens der Brennkraftmaschine (1) die Schritte:

- Berechnung einer prädizierten Regelabweichung (ê) der Regelgröße (y), die der zu erwartenden Regelabweichung (e) entspricht für einen in der Zukunft liegenden Zeitpunkt, unter Verwendung der endlichen Anzahl an Eingangsgrößen ($x_n$), durch das neuronale Netz (NN);
- Zuführung der prädizierten Regelabweichung (ê) zur Berechnung der relativen Kraftstoffmenge ($r_K$) des Regelsystems (3), im aktuellen Zeitpunkt, sodass zukünftig auftretende Regelabweichungen (e) kompensiert werden;

ausgeführt werden.

2. Verfahren nach Anspruch 1, **dadurch gekennzeichnet, dass** die Regelgröße (y) der Lambda-Istwert ($\lambda_{ist}$) ist.

3. Verfahren nach Anspruch 1 oder 2, **dadurch gekennzeichnet, dass** die Eingangsgrößen ($x_n$) für das neuronale Netz wenigstens eine Störgröße (ds) umfassen, die einer der Messkenngrößen des Steuergerätes (2) entspricht.

4. Verfahren nach Anspruch 3, **dadurch gekennzeichnet, dass** zusätzlich zum Wert ($x_n(t)$) des aktuellen Zeitschritts (t) jeder Eingangsgröße ($x_n$), der Wert ($x_n(t-1)$) des vorherigen Zeitschritts (t-1) jeder Eingangsgröße ($x_n$) von dem neuronalen Netz verwendet wird.

5. Verfahren nach Anspruch 4, **dadurch gekennzeichnet, dass** zusätzlich wenigstens jeder zwei oder mehr Zeitschritte zurückliegende Wert der Eingangsgrößen ($x_n$) von dem neuronalen Netz verwendet wird.

6. Verfahren nach einem der vorherigen Ansprüche, **dadurch gekennzeichnet, dass** die Bewertung des optimierten neuronalen Netzes mittels Berechnung der sich aktuell in einem Abgaskatalysator, der in einer Abgasabführleitung der Brennkraftmaschine angeordnet ist, befindlichen Sauerstoffmenge ($m_{O2}$) erfolgt.

7. Verfahren nach einem der vorherigen Ansprüche, **dadurch gekennzeichnet, dass** die Eingangsgrößen ($x_n$) des neuronalen Netzes wenigstens eine der Störgrößen (ds) Wert eines Abgasturboladerstellers, Raildruck, Position von wenigstens einem Einlassventil, Luftdruck des Kurbelgehäuses, Position einer Drosselklappe, Saugrohrdruck, Druck vor einer Drosselklappe, Ladedruck oder Massenstrom durch ein Tankentlüftungsventil umfassen.

8. Verfahren nach einem der Ansprüche 1 bis 6, **dadurch gekennzeichnet, dass** die Eingangsgrößen ($x_n$) des neuronalen Netzes wenigstens drei der Störgrößen (ds) Wert eines Abgasturboladerstellers, Raildruck, Position von wenigstens einem Einlassventil, Luftdruck des Kurbelgehäuses, Position einer Drosselklappe, Saugrohrdruck, Druck vor einer Drosselklappe, Ladedruck oder Massenstrom durch ein Tankentlüftungsventil umfassen.

9. Steuergerät (2) zum Betreiben einer Brennkraftmaschine (1) **dadurch gekennzeichnet, dass** es eingerichtet ist, um ein Verfahren nach einem der vorherigen Ansprüche auszuführen.

10. Brennkraftmaschine (1) mit einer Lambdaregelung, **dadurch gekennzeichnet, dass** sie ein Steuergerät (2) nach Anspruch 9 umfasst.

**Figur 1**

**Figur 2**

**Figur 3**

**Figur 4**

**Figur 5**

Europäisches
Patentamt

European
Patent Office

Office européen
des brevets

**EUROPÄISCHER RECHERCHENBERICHT**

Nummer der Anmeldung

EP 21 18 0842

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | SCHOKNECHT R ET AL: "Using reinforcement learning for engine control", ARTIFICIAL NEURAL NETWORKS, 1999. ICANN 99. NINTH INTERNATIONAL CONFER ENCE ON (CONF. PUBL. NO. 470) EDINBURGH, UK 7-10 SEPT. 1999, LONDON, UK,IEE, UK, Bd. 1, 7. September 1999 (1999-09-07), Seiten 329-334, XP006502265, DOI: 10.1049/CP:19991130 ISBN: 978-0-85296-721-8 | 1-3,6-10 | INV. F02D41/14 G06N3/08 |
| Y | * das ganze Dokument * ----- | 4,5 | |
| A | US 2019/325671 A1 (TAKASU YUSUKE [JP] ET AL) 24. Oktober 2019 (2019-10-24) * Zusammenfassung; Abbildung 14 * * Absätze [0128] - [0139] * ----- | 1,9,10 | |
| A | JP 2019 143477 A (TOYOTA MOTOR CORP) 29. August 2019 (2019-08-29) * Zusammenfassung; Abbildungen 7-9 * * Absätze [0029] - [0046] * ----- | 1,9,10 | RECHERCHIERTE SACHGEBIETE (IPC) |
| Y | EP 0 724 073 A2 (MATSUSHITA ELECTRIC IND CO LTD [JP]) 31. Juli 1996 (1996-07-31) * Zusammenfassung; Abbildung 15 * ----- | 4,5 | G06N F02D |

Der vorliegende Recherchenbericht wurde für alle Patentansprüche erstellt

| Recherchenort | Abschlußdatum der Recherche | Prüfer |
|---|---|---|
| Den Haag | 10. November 2021 | Röttger, Klaus |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
....................................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 18 0842

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-11-2021

| Im Recherchenbericht angeführtes Patentdokument | Datum der Veröffentlichung | Mitglied(er) der Patentfamilie | Datum der Veröffentlichung |
|---|---|---|---|
| US 2019325671 A1 | 24-10-2019 | JP 6501018 B1<br>JP 2019190306 A<br>US 2019325671 A1 | 17-04-2019<br>31-10-2019<br>24-10-2019 |
| JP 2019143477 A | 29-08-2019 | KEINE | |
| EP 0724073 A2 | 31-07-1996 | CA 2168059 A1<br>DE 69635429 T2<br>EP 0724073 A2<br>KR 960029602 A<br>US 5657737 A | 28-07-1996<br>03-08-2006<br>31-07-1996<br>17-08-1996<br>19-08-1997 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015210381 A1
- JP 3144264 B

- EP 1854984 A1